# EUROPEAN PATENT SPECIFICATION

(11) **EP 2 601 770 B1**
(45) Date of publication and mention of the grant of the patent: **17.05.2017**
(21) Application number: 11714217.4
(22) Date of filing: 22.03.2011
(51) Int. Cl.: H04L 29/06, H04W 12/08

(54) **A NETWORK, AND METHOD FOR OPERATING IT**
NETZWERK, UND VERFAHREN ZU DESSEN BETRIEB
RÉSEAU, ET PROCÉDÉ POUR SA EXPLOITATION

(43) Date of publication of application: 12.06.2013
(73) Proprietor: NEC CORPORATION, Tokyo 108-8001 (JP)
(72) Inventor: ROST, Peter, 01257 Dresden (DE); MAEDER, Andreas, 97072 Würzburg (DE); SWETINA, Joerg, 69198 Schriesheim (DE)
(74) Representative: Patent- und Rechtsanwälte Ullrich & Naumann
(86) International application number: PCT/EP2011/001408
(87) International publication number: WO 2012/126484

(56) References cited:
- WO-A1-2011/051182
- "3rd Generation Partnership Project; Technical Specification Group Services and System Aspects; Study on Facilitating Machine to Machine Communication in 3GPP Systems; (Release 8)", 3GPP STANDARD; 3GPP TR 22.868, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V8.0.0, 1 March 2007 (2007-03-01), pages 1-15, XP050361381,
- "Machine- to- Machine communications (M2M); Functional architecture", ETSI DRAFT; DRAFT_ARCHITECTURE_TS POST M2M#8 REV MARKS, EUROPEAN TELECOMMUNICATIONS STANDARDS INSTITUTE (ETSI), 650, ROUTE DES LUCIOLES ; F-06921 SOPHIA-ANTIPOLIS ; FRANCE, no. V0.1.3, 23 February 2010 (2010-02-23), pages 1-53, XP014050802, [retrieved on 2010-02-23]
- "Machine-to-Machine communications (M2M); M2M service requirements", ETSI DRAFT; 00001V031WITH-REV-MARK, EUROPEAN TELECOMMUNICATIONS STANDARDS INSTITUTE (ETSI), 650, ROUTE DES LUCIOLES ; F-06921 SOPHIA-ANTIPOLIS ; FRANCE, no. V0.3.1, 23 October 2009 (2009-10-23), pages 1-47, XP014050861, [retrieved on 2009-10-23]

## Description

The present invention relates to a method for operating a network, wherein at least one M2M (Machine to Machine) node providing and/or using an M2M service is assigned to a cellular network and will be authorized for communication with the cellular network for providing Machine-Type Communication (MTC). Further, the present invention relates to a network, wherein at least one M2M node providing and/or using an M2M service is assigned to a cellular network and will be authorized for communication with the cellular network for providing MTC.

M2M communication has a broad application spectrum such as smart metering, tracking of goods, controlling of actuators and others. With the large number of possible applications and services also the number of M2M nodes per user is constantly increasing and will reach the order of 10² and may be 10³ within the next decade. This implies new challenges such as addressing of M2M nodes, billing of M2M services, and managing MTC by the operator's cellular or core network. There already exist studies and specifications, which are describing the state of the art up to now, such as
- 3GPP TR 33.812, Feasibility study on the security aspects of remote provisioning and change of subscription for Machine to Machine (M2M) equipment
- 3GPP TS 22.259, Service requirements for Personal Network Management (PNM)
- 3GPP TS 22.868, Study on facilitating machine to machine communication in 3GPP systems
- 3GPP TR 33.812, Feasibility study on the security aspects of remote provisioning and change of subscription for Machine to Machine (M2M) equipment
- 3GPP TR 33.817, Feasibility Study on (U)SIM Security Reuse by Peripheral Devices on Local Interfaces
- 3GPP TR 22.368, Service requirements for Machine-Type Communications (MTC)
- 3GPP TR 23.888, System Improvements for Machine-Type Communications.

Most notably, 3GPP TS 22.868 states that depending on the communication task, machines might communicate, via non 3GPP (3^{rd} Generation Partnership Project) access technology, to the master machine (containing a SIM (Subscriber Identification Module)/USIM (Universal Subscriber Identity Module)/ISIM (International Mobile Subscriber Identity)) or obtain authorisation from the master machine to communicate directly e.g. using the 3G or fixed NGN (Next Generation Network), with an external entity.

The current state of the art to connect M2M nodes is to deploy master machines or proxies, which implies that a M2M node may require two interfaces; one interface is used to communicate with the master machine to obtain authorisation and one interface is used to communicate with the cellular network. In addition, this method requires the master machine to be reachable by the M2M node in order to enable the M2M node to communicate with the cellular network. This strongly limits the applicability of this method to scenarios where M2M nodes must be in communication range of the master machine, which might require a very high density of master machines in order to connect all M2M nodes. Further methods for obtaining authorisation to communicate over the cellular network have been proposed in 3GPP TR 33.812 such as preconfigured keys provided for each M2M node.

One major issue in MTC is the equipment of M2M nodes with UICC (Universal Integrated Circuit Card) and USIM, which will become too expensive and implies significant managing and billing overhead for the operator.

It is an object of the present invention to improve and further develop a method for operating a network and an according network for allowing a simplified use of an M2M node or M2M nodes.

In accordance with the invention, the aforementioned object is accomplished by a method comprising the features of claim 1 and by a network comprising the features of claim 15.

According to claim 1 at least one M2M node will be associated with at least one master terminal that owns a unique master terminal ID (Identifier), which uniquely identifies said master terminal within the cellular network, and that a state of authentication of the M2M node or M2M nodes will be initialized, based on authentication data of the master terminal, so that the M2M node or M2M nodes can be addressed using the master terminal ID and can directly communicate with the cellular network on the basis of the initialized state of authentication, wherein at least one M2M service - represented by the M2M nodes within their M2M service-specific group - or at least one M2M node or the M2M nodes within their M2M service-specific group will be assigned to a home cell using a location identifier. According to claim 15 the network contains means for associating the at least one M2M node with at least one master terminal that owns a unique master terminal ID, which uniquely identifies said master terminal within the cellular network, and means for initializing a state of authentication of the M2M node or M2M nodes, the initializing being based on authentication data of the master terminal, so that the M2M node or M2M nodes can be addressed using the master terminal ID and can directly communicate with the cellular network on the basis of the initialized state of authentication, wherein at least one M2M service-represented by the M2M nodes within their M2M service-specific group - or at least one M2M node or the M2M nodes within their M2M service-specific group is assigned to a home cell using a location identifier.

According to the invention it has been recognized that it is possible to allow for a simplified addressing of an M2M node or of M2M nodes by associating at least one M2M node with at least one master terminal that owns a unique master terminal ID, which uniquely identifies said master terminal within the cellular network. Thus, addressing of the M2M nodes is possible on the basis of the master terminal ID. Further, for communication of the M2M nodes with the cellular network a state of authentication of the M2M node or M2M nodes will be initialized based on authentication data of the master terminal. Thus, the M2M node or M2M nodes can be addressed using the master terminal ID and can directly communicate with the cellular network on the basis of the initialized state of authentication. For realizing such a communication the M2M nodes don't need any UICC or USIM. As a result, a simplified use of an M2M node or M2M nodes for providing Machine-Type Communication is possible.

For simplified addressing of M2M nodes multiple M2M nodes providing and/or using the same M2M service could be grouped within one M2M service-specific group. Such an M2M service-specific group could be assigned to the master terminal for being addressed via the master terminal.

With regard to a further simplified addressing the M2M nodes within the M2M service-specific group could be addressed concurrently. Thus, a very simple addressing procedure could be realized.

Within a preferred embodiment the M2M nodes within the M2M service-specific group or the M2M service-specific group or an individual M2M node could be addressed using an M2M service-specific identifier in addition to the master terminal ID. Thus, the addressing procedure could be based on the master terminal ID and the M2M service-specific identifier for distinguishing M2M nodes used for different M2M services. Such an addressing procedure could be alternatively or additionally performed using an own IP (Internet Protocol) address in addition to the master terminal ID. In such a case a very simple and reliable addressing of M2M nodes could be realized.

Within a further preferred embodiment at least one M2M service - represented by the M2M nodes within their M2M service-specific group - or at least one M2M node or the M2M nodes within their M2M service-specific group could be assigned to a home cell using a location identifier. This location identifier could be used to avoid paging of M2M nodes as M2M nodes are assumed to be either co-located with the master terminal or to be location-invariant. An operator's data base could keep an entry of supported services. In other words, each M2M service or the M2M nodes providing this service could be assigned to a home cell which is supposed to not change its location. The location identifier could be a LAC (Location Area Code).

Within a further preferred embodiment at least one M2M node could be assigned to a visitor cell which is identical or is corresponding to the current location of the master terminal. Thus, the M2M node or M2M nodes could be paged in an area which is defined by the location identifier and/or which is in the visitor cell. For simply addressing the M2M nodes of an M2M service both home and visitor cell could be paged for a particular location-variant service and only the home cell could be paged for location-invariant services.

With regard to a very reliable MTC the M2M node or M2M nodes could communicate with the cellular network via an aggregation point, which acts as a proxy terminal between the cellular network and the M2M node or M2M nodes. Such an aggregation point could collect and forward data of multiple M2M nodes for simplifying the operation of the network.

Depending on the individual situation at least one M2M service-specific group could be managed using scheduled access or random access.

For providing a reliable resource assignment a resource assignment on medium access layer could be performed specifically for at least one M2M service. Generally, a resource assignment could be performed using an abstract interface between a resource allocation function and the M2M service.

Within a further concrete embodiment an interface could be provided between layer L1 or layer L2 and Layer 3, which provides an abstract logical access to the physical resources. This allows a high degree of flexibility and a technology independent implementation of the inventive method.

Within a further preferred embodiment M2M services and M2M service-specific groups of M2M nodes could be either identified on physical and medium access layer (PHY/MAC layer) or on higher layers, such as network layer, for instance TCP/IP (Transmission Control Protocol/Internet Protocol).

For further simplifying the implementation of MTC with M2M nodes the same SIM could be installed on multiple M2M nodes.

With regard to a very simple and reliable association of an M2M node or of M2M nodes with a master terminal a predefined pairing key or predefined pairing keys could be used. Such an implementation allows for using an M2M node or M2M nodes without an own SIM or for using a master terminal SIM.

Especially within 3GPP LTE (Long Term Evolution) at least one RNTI (Radio Network Temporary Identifier) associated to an IMSI of a master terminal could be generated and allocated to an M2M node or M2M nodes during an initial attachment procedure.

For better understanding of the claimed invention important aspects of the invention are further explained as follows:
This document discloses a novel method for addressing, managing and billing mobile terminals - M2M nodes and/or master terminals - in cellular networks such as GSM, UMTS, IEEE 802.16 or 3GPP LTE. More specifically, M2M nodes can directly access the cellular network without the need to regularly communicate with an aggregation point or master terminal. All M2M nodes only need to be equipped with one interface, which is used to access the cellular network. Each mobile terminal is identified by an ID such as IMSI, and each M2M node does not require an own IMSI but may be identified by an own IP address, or any other kind of address mechanism such as service-identifiers. A master terminal, that contains a USIM, can be assigned to a group of M2M nodes. To each unique ID exactly one master terminal is assigned. Additionally, the M2M nodes associated with a master terminal can be assigned to a home cell and this home cell is supposed to not change during the node's lifetime.

This document introduces a novel method to organize M2M nodes, which are used for MTC. Each M2M node is associated to at least one master terminal by assigning the same unique ID of the master terminal to the M2M node. The master terminal together with associated M2M nodes represents a physically distributed device, which is still treated as one logical device providing or using mobile services. The M2M node's authentication state can be initialized once in its lifetime and then the M2M node accesses the cellular network based on this state.

This document refers to initialization of an M2M node as the process of setting its authentication state such that the M2M node can directly access the cellular network without the necessity to have a unique network wide address.

The network not necessarily distinguishes between the master terminal and M2M node. Master terminal and M2M nodes access the network using the same authentication method and state. It is possible to identify the M2M nodes only by the service they provide or use, or on higher layers, L3 "Network Layer" and higher.

Each M2M service - and therefore the M2M nodes providing this service - can be assigned to a home cell using an additional location identifier, e.g. Location Area Code - LAC, and this home cell is supposed to not change. This location identifier can be used to avoid paging of M2M nodes as M2M nodes are assumed to be either co-located with the master terminal or to be location invariant. The operator's database can keep an entry of supported services. Each service may be assigned to a visitor cell, which is the same as its master terminal's currently assigned cell. Here two kinds of services can be distinguished: location-variant and location-invariant. Within an embodiment, to address the nodes of a service both home and visitor cell are paged for the particular location-variant service and only the home cell for location-invariant services.

M2M nodes can be grouped according to the service that is provided. Therefore, multiple M2M nodes within one group offer the same service and can be addressed as a group by the network, i.e. they need not to be addressed individually. The number of nodes per group needs not to be revealed to the network and the operator. Hence, the individual M2M nodes can be distinguished by the service on layers above L2 or L3 using the content provided by the M2M nodes. M2M nodes within one group can access the radio resources either using a schedule-based method or using random access. Hence, there can be the necessity and possibility for cross-layer interaction between layers L1/L2 and the network layer L3, i.e. based on the actual service (defined on L3 and above) the resource assignment on L1/L2 is performed. In order to provide as much flexibility as possible, there should exist an interface between L1/L2 and L3, which provides an abstract logical access to the physical resources. This allows for a technology independent implementation.

M2M nodes might be able to obtain the service addressing by decoding only parts of the address specifier or actual message on L1/L2, which significantly reduces the required overhead per node. By contrast, each node could decode all messages destined to the master terminal and acquires the addressed service on L3 and above.

Further embodiments of the invention could comprise a method and system to access machine-type communication services, where M2M nodes provide or use MTC services and are configured such that they are associated or paired with a master terminal that owns a unique ID, which uniquely identifies said master terminal within the cellular network. The association is done such that sets of M2M nodes providing specific MTC services are concurrently addressed using the master terminal ID. Individual M2M nodes need not to be distinguished from the assigned master terminal on the radio access layer but are transparent towards the cellular network. The state of the authentication of the individual nodes is initialized based on authentication data of the master terminal and afterwards used to authenticate the node towards the cellular network. An M2M node may then directly communicate with the cellular network.

Such a method and system could comprise groups of M2M nodes or individual M2M nodes, which are addressed using a service-specific identifier in addition to the master terminal ID. This service-specific identifier identifies groups of M2M nodes assigned to one master terminal and providing the addressed service.

Within such a method and system each M2M service - represented by its assigned M2M nodes - could be assigned to a home cell using a persistent location identifier. This location identifier is used to avoid paging of M2M nodes as M2M nodes are assumed to be either bound to the master terminal or to be location-invariant at the location given by the location identifier. In addition, each M2M node can be assigned to a visitor cell, which is identical with or is corresponding to its master terminal's current location. M2M nodes are only paged in the area that is defined by the location identifier and in the visitor cell.

The M2M nodes could communicate to the cellular network via an aggregation point, which acts as proxy terminal between the mobile communication network and multiple M2M nodes, and which collects and forwards the data of multiple M2M nodes.

The resource assignment on medium access layer could be done specifically for each service using an abstract interface between a resource allocation function and the service.

The present invention is providing a solution, which
- does not require an own UICC/USIM for each M2M node,
- allows for a simplified billing of services provided by individual M2M nodes,
- enables a simple assignment of M2M services to user, and
- reduces the overhead of managing individual M2M nodes and services.

This invention introduces a solution, which provides an implicit addressing based on the provided M2M services without the need for central terminals aggregating M2M data (M2M proxies) and which allows for
- simplified node addressing based on the provided service,
- grouping nodes based on the provided services,
- simplifying the managing of M2M nodes and billing of M2M services, and
- providing a way to converge core network functions and RAN (Radio Access Network) functions.

There are several ways how to design and further develop the teaching of the present invention in an advantageous way. To this end it is to be referred to the patent claims subordinate to patent claim 1 on the one hand and to the following explanation of preferred embodiments of the invention by way of example, illustrated by the drawing on the other hand. In connection with the explanation of the preferred embodiments of the invention by the aid of the drawing, generally preferred embodiments and further developments of the teaching will we explained. In the drawing
- Fig. 1: is illustrating the information flow within an embodiment of a method for operating a network according to the invention,
- Fig. 2: is illustrating a procedure to implement an embodiment of the invention in 3GPP and
- Fig. 3: is illustrating a procedure to implement an embodiment of the invention in 3GPP without SIM at M2M nodes.

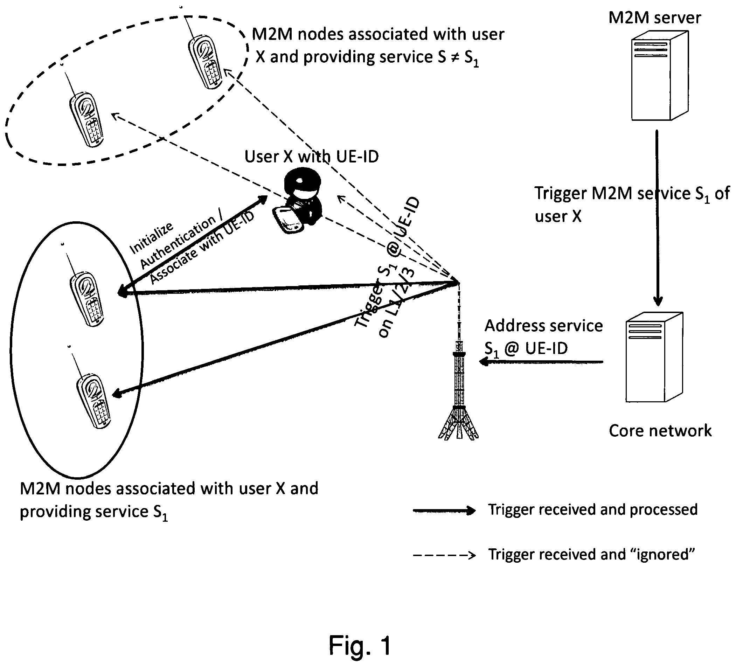

Fig. 1 is illustrating the information flow within an embodiment of a method for operating a network according to the invention. Fig. 1 especially illustrates the underlying system setup. A user X - acting as a master terminal - with user-id UE-ID owns multiple M2M nodes, which are associated with this user and a service S₁. The association of M2M node and user is done such that both share the same UE-ID. The process of association is similar to "pairing" even though as a result of the process considered in this patent both terminals share the same UE-ID, as seen from the network. If the M2M server triggers this service of user X - for instance temperature measurement -, the mobile network either pages the UE in order to determine the position of those M2M nodes that move together with the UE or the mobile network knows the cell assigned to a particular M2M node/service and pages only this cell. Based on the previous association of the specific M2M nodes with the user terminal as well as the specific assignment of services to M2M nodes, only those M2M nodes that provide service S₁ will reply to the network request.

In the following multiple embodiments of the invention are explained by important aspects of the respective embodiment:

### Embodiment 1

Services are spatially distributed such that different physically separated M2M nodes can be assigned to the same M2M service and are concurrently addressed by the network. The network is not necessarily able to distinguish the individual nodes providing or using the M2M service. A distinction of the individual nodes by the M2M service is possible by methods proprietary to the M2M service, i.e. using the content provided by the M2M service.

### Embodiment 2

All M2M services can be assigned to a common unique service-ID or M2M service-specific identifier, which is different from the unique ID of the master terminal but assigned to the same M2M service as of the master terminal. Such a unique service-ID or M2M service-specific identifier is explicitly assigned to all M2M services.

### Embodiment 3

M2M services and groups of M2M nodes can be either identified on physical and medium access layer or on higher layers such as network layer, for instance TCP/IP. In order to identify M2M services and groups of M2M nodes on PHY/MAC layer, either one needs to carry information specific to the addressed M2M service or the particular group of M2M nodes. This implies that the network needs not to address particular nodes on PHY/MAC layer but only M2M services and inherently those M2M nodes, which provide these M2M services. Hence, it might be that one M2M node is part of multiple M2M service groups and therefore is addressed by different M2M service identifiers.

### Embodiment 4

In order to provide as much flexibility as possible, there should exist an interface between layers L1/L2 and L3, which provides an abstract logical access to the physical resources. This allows for a technology independent implementation.

### Embodiment 5

Two kinds of M2M services can be distinguished: location-variant and location-invariant. To initiate an M2M service both home and visitor cell are paged for the particular location-variant M2M service and only the home cell for location-invariant M2M services.

### Embodiment 6

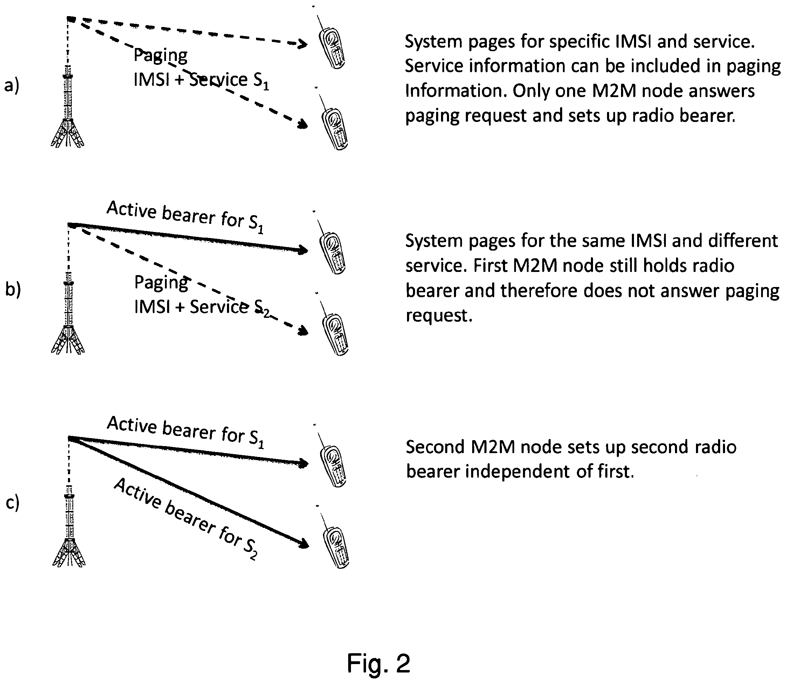

One implementation in the context of 3GPP bases on the assumption that the same SIM can be installed on multiple M2M nodes and therefore all M2M nodes have the same address (IMSI) as well as the same authentication procedure. The procedure is illustrated in Fig. 2. The existing connection establishment as in 3GPP LTE is not changed except for an additional identifier in the paging information, which selects the M2M service. Since all M2M nodes have an identical SIM, they are able to answer the paging request and establish a connection (part a)). If a connection exists but the M2M node responsible for a second M2M service has to be paged, the first M2M node, which already established a connection, has to ignore this paging request (which usually is the case). Then, the second M2M node is able to establish a connection using its own SIM.

### Embodiment 7

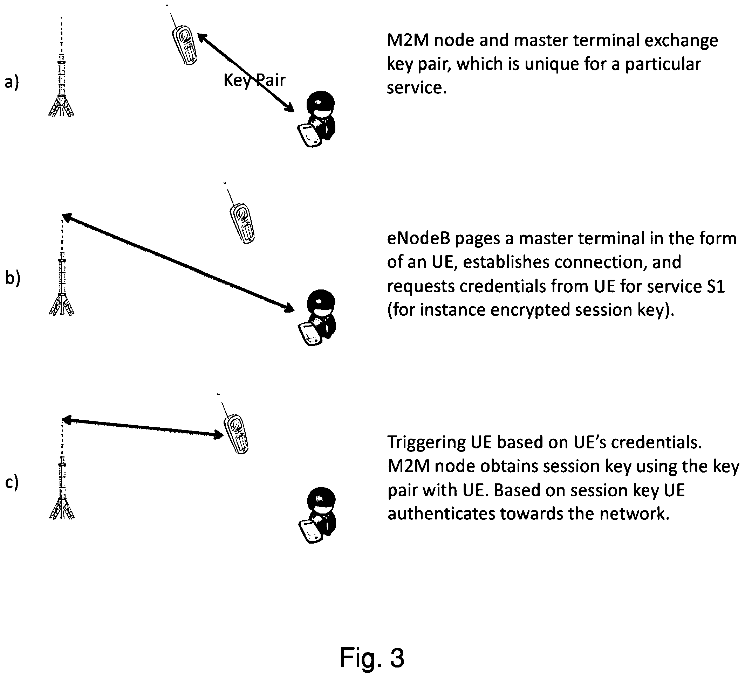

Another implementation in the context of 3GPP is to use predefined pairing keys, which allows for using M2M nodes without an own SIM or using the master terminal SIM. The procedure is illustrated in Fig. 3.

Before the network can connect to the M2M node/service, the M2M node has to exchange a key pair with the associated master terminal. Such a key pairing can be done at provision time as it is used for instance in Bluetooth.

In order to establish a connection with an M2M node/service, the network establishes at first a connection with the assigned master terminal. This connection is encrypted with a session key. The master terminal encrypts this session key with the paired key from the M2M node/service. The encrypted session key is sent back to the network, i.e. eNodeB. The logical connection of eNodeB and master terminal is not terminated.

In the next step, the network pages the M2M service and requests authentication for this M2M service. Part of this request is the IMSI and the encrypted session key. The M2M node can decrypt the session key and respond to the eNodeB request based on the same session key used by the master terminal. Hence, the M2M node can authenticate without own SIM, it can use the IMSI, and the network needs not to have knowledge whether a particular M2M service is provided by the master terminal itself or a separate M2M node.

### Embodiment 8

A further implementation concerns mapping of radio bearers and resource allocation/data transmission in uplink and downlink between base station and M2M node. In 3GPP LTE Rel. 8 and later, UEs are identified by several Radio Network Temporary Identifiers (RNTI_{S}) which are unique within a radio cell. For example, downlink control information (DCI) elements which carry resource allocation information for uplink and downlink are scrambled such that only the UE with the associated C-RNTI (cell-RNTI) can decode the information. In this way, an implicit addressing scheme is realized.

RNTIs are 16bit long values which are generated and assigned to the UE or MTC on MAC layer. In order to enable individual or group addressing of M2M nodes under claim one, appropriate RNTIs associated to the UE IMSI (i.e. Temporary C-RNTI, C-RNTI, SPS-RNTI, etc.) must be generated and allocated to the M2M nodes during the initial attachment procedure, see 3GPP, "TS 36.300 Evolved Universal Terrestrial Radio Access (E-UTRA) and Evolved Universal Terrestrial Radio Access Network (E-UTRAN); Overall description; Stage 2", Sept. 2010, 3GPP, "TS 36.321 Evolved Universal Terrestrial Radio Access (E-UTRA); Medium Access Control (MAC) protocol specification", Sept. 2010 and 3GPP, "TS 36.331, Evolved Universal Terrestrial Radio Access (E-UTRA); Radio Resource Control (RRC); Protocol specification", Sept. 2010. In this case the UE has the function of a master terminal.

Furthermore, the eNodeB can use the RNTIs within one radio bearer to address different M2M nodes, such that there is a one-to-many relation between EPS (Evolved Packet System) bearer/radio bearer and UE/M2M nodes. Alternatively, one EPS bearer/radio bearer is created for each M2M node, with one-to-one relation to C-RNTIs.

### Important aspects of embodiments of the invention are:

- Definition of a logical device - e.g. a combination of a master terminal and M2M nodes -, which consists of multiple physically separated terminals and which appear to be a single addressable device towards the cellular network.
- The physical M2M nodes are assumed to be either co-located with the master terminal or to be location invariant.
- Addressing of M2M nodes is done using a service specific identifier and therefore terminal/node addressing is replaced by unique IDs assigned to a logical device and an ID assigned to a service.
- Each M2M node can be assigned to a home and visitor cell, where the visitor cell is supposed to be the cell of the assigned master terminal.

Within the embodiments is possible:
- Scalable provisioning of M2M service,
- Direct connection of M2M nodes without dedicated proxy access point,
- Individual USIM or UICC per M2M node is not required,
- Flexible interface for the implementation of M2M services and
- Simplified billing and managing of M2M nodes.

Many modifications and other embodiments of the invention set forth herein will come to mind the one skilled in the art to which the invention pertains having the benefit of the teachings presented in the foregoing description and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A method for operating a network, wherein at least one M2M, Machine to Machine, node providing and/or using an M2M service is assigned to a cellular network and will be authorized for communication with the cellular network for providing Machine-Type Communication, MTC, wherein the at least one M2M node will be associated with at least one master terminal that owns a unique master terminal ID, Identifier, which uniquely identifies said master terminal within the cellular network, and that a state of authentication of the M2M node or M2M nodes will be initialized, based on authentication data of the master terminal, so that the M2M node or M2M nodes can be addressed using the master terminal ID and can directly communicate with the cellular network on the basis of the initialized state of authentication,
wherein at least one M2M service - represented by the M2M nodes within their M2M service-specific group - or at least one M2M node or the M2M nodes within their M2M service-specific group will be assigned to a home cell using a location identifier.

2. A method according to claim 1, wherein multiple M2M nodes providing and/or using the same M2M service will be grouped within one M2M service-specific group,
wherein preferably the M2M service-specific group is assigned to the master terminal.

3. A method according to claim 2, wherein the M2M nodes within the M2M service-specific group will be addressed concurrently.

4. A method according to one of claims 1 to 3, wherein the M2M nodes within the M2M service-specific group or the M2M service-specific group or an individual M2M node will be addressed using an M2M service-specific identifier in addition to the master terminal ID.

5. A method according to one of claims 1 to 4, wherein the M2M nodes within the M2M service-specific group or the M2M service-specific group or an individual M2M node will be addressed using an own IP, Internet Protocol, address in addition to the master terminal ID.

6. A method according to one of claims 1 to 5, wherein at least one M2M node will be assigned to a visitor cell which is identical or is corresponding to the current location of the master terminal.

7. A method according to one of claims 1 to 6, wherein the M2M node or M2M nodes will be paged in an area which is defined by the location identifier and/or which is in the visitor cell.

8. A method according to one of claims 1 to 7, wherein the M2M node or M2M nodes communicate with the cellular network via an aggregation point, which acts as a proxy terminal between the cellular network and the M2M node or M2M nodes,
wherein preferably the aggregation point collects and forwards data of
multiple M2M nodes.

9. A method according to one of claims 2 to 8, wherein at least one M2M service-specific group will be managed using scheduled access or random access.

10. A method according to one of claims 1 to 9, wherein a resource assignment on medium access layer will be performed specifically for at least one M2M service and/or
wherein a resource assignment will be performed using an abstract interface between a resource allocation function and the M2M service.

11. A method according to one of claims 1 to 10, wherein an interface will be provided between layer L1 or layer L2 and layer L3, which provides an abstract logical access to the physical resources and/or
wherein M2M services and M2M service-specific groups of M2M nodes can be either identified on physical and medium access layer, PHY/ MAC layer, or on higher layers.

12. A method according to one of claims 1 to 11, wherein the same SIM, Subscriber Identification Module, will be installed on multiple M2M nodes.

13. A method according to one of claims 1 to 12, wherein a predefined pairing key or predefined pairing keys will be used for association of an M2M node or M2M nodes with a master terminal, which allows for using an M2M node or M2M nodes without an own SIM or for using a master terminal SIM.

14. A method according to one of claims 1 to 13, wherein at least one RNTI, Radio Network Temporary identifier, associated to an IMSI, International Mobile Subscriber Identity, a master terminal will be generated and allocated to an M2M node or M2M nodes during an initial attachment procedure.

15. A network, preferably for carrying out the method for operating a network according to any one of claims 1 to 14, wherein at least one M2M, Machine to Machine, node providing and/or using an M2M service is assigned to a cellular network and will be authorized for communication with the cellular network for providing Machine-Type Communication, MTC, the network comprising means for associating the at least one M2M node with at least one master terminal that owns a unique master terminal ID, Identifier, which uniquely identifies said master terminal within the cellular network, and means for initializing a state of authentication of the M2M node or M2M nodes, the initializing being based on authentication data of the master terminal, so that the M2M node or M2M nodes can be addressed using the master terminal ID and can directly communicate with the cellular network on the basis of the initialized state of authentication,
wherein at least one M2M service - represented by the M2M nodes within their M2M service-specific group - or at least one M2M node or the M2M nodes within their M2M service-specific group is assigned to a home cell using a location identifier.

## Patentansprüche

1. Ein Verfahren zum Betreiben eines Netzwerks, wobei zumindest ein M2M, Maschine-zu-Maschine, Knoten, der einen M2M Service bereitstellt und/oder nutzt, einem zellularen Netzwerk zugeordnet ist und zur Kommunikation mit dem zellularen Netzwerk zur Bereitstellung einer Maschinen-Typ Kommunikation, MTC, autorisiert wird, wobei der zumindest eine M2M Knoten zumindest einem Master-Terminal zugeordnet wird, das eine spezifische Master-Terminal-ID, Kennung, besitzt, die das Master-Terminal innerhalb des zellularen Netzwerks eindeutig identifiziert, und dass ein Authentifizierungszustand des M2M Knotens oder der M2M Knoten auf Basis von Authentifizierungsdaten des Master-Terminals initialisiert wird, so dass der M2M Knoten oder die M2M Knoten unter Verwendung der Master-Terminal-ID adressiert werden kann oder können und mit dem zellularen Netzwerk auf der Basis des initialisierten Authentifizierungszustands direkt kommunizieren kann oder können,
wobei zumindest ein M2M Service - der durch die M2M Knoten innerhalb deren M2M servicespezifischen Gruppe dargestellt wird - oder zumindest ein M2M Knoten oder die M2M Knoten innerhalb deren M2M-servicespezifischen Gruppe unter Verwendung einer Ortskennung einer Heimzelle zugeordnet wird oder werden.

2. Ein Verfahren nach Anspruch 1, wobei mehrere M2M Knoten, die denselben M2M Service bereitstellen und/oder nutzen, innerhalb einer M2M-servicespezifischen Gruppe gruppiert werden,
wobei vorzugsweise die M2M-servicespezifische Gruppe dem Master-Terminal zugeordnet wird.

3. Ein Verfahren nach Anspruch 2, wobei die M2M Knoten innerhalb der M2M-servicespezifischen Gruppe gleichzeitig adressiert werden.

4. Ein Verfahren nach einem der Ansprüche 1 bis 3, wobei die M2M Knoten innerhalb der M2M-servicespezifischen Gruppe oder die M2M-servicespezifische Gruppe oder ein individueller M2M Knoten zusätzlich zu der Master-Terminal-ID unter Verwendung einer M2M-servicespezifischen Kennung adressiert werden oder wird.

5. Ein Verfahren nach einem der Ansprüche 1 bis 4, wobei die M2M Knoten innerhalb der M2M-servicespezifischen Gruppe oder die M2M-servicespezifische Gruppe oder ein individueller M2M Knoten zusätzlich zu der Master-Terminal-ID unter Verwendung einer eigenen IP, Internet Protokoll, Adresse adressiert werden.

6. Ein Verfahren nach einem der Ansprüche 1 bis 5, wobei zumindest ein M2M Knoten einer Besucherzelle zugeordnet wird, die mit dem aktuellen Ort des Master-Terminals identisch ist oder dem aktuellen Ort des Master-Terminals entspricht.

7. Ein Verfahren nach einem der Ansprüche 1 bis 6, wobei der M2M Knoten oder die M2M Knoten in einem Bereich gepaged werden, der durch die Ortskennung definiert ist und/oder in der Besucherzelle ist.

8. Ein Verfahren nach einem der Ansprüche 1 bis 7, wobei der M2M Knoten oder die M2M Knoten mit dem zellularen Netzwerk über einen Aggregationspunkt kommunizieren, der als ein Proxy-Terminal zwischen dem zellularen Netzwerk und dem M2M Knoten oder den M2M Knoten wirkt,
wobei vorzugsweise der Aggregationspunkt Daten von mehreren M2M Knoten sammelt und weiterleitet.

9. Ein Verfahren nach einem der Ansprüche 2 bis 8, wobei zumindest eine M2M-servicespezifische Gruppe unter Verwendung eines geplanten Zugriffs oder Zufallszugriffs gemanagt wird.

10. Ein Verfahren nach einem der Ansprüche 1 bis 9, wobei eine Ressourcenzuordnung auf mittlerer Zugangsschicht spezifisch für zumindest einen M2M Service durchgeführt wird und/oder
wobei eine Ressourcenzuordnung unter Verwendung einer abstrakten Schnittstelle zwischen einer Ressourcenzuordnungsfunktion und dem M2M Service durchgeführt wird.

11. Ein Verfahren nach einem der Ansprüche 1 bis 10, wobei eine Schnittstelle zwischen Schicht L1 oder Schicht L2 und Schicht L3 bereitgestellt wird, die einen abstrakten logischen Zugang zu den physikalischen Ressourcen bereitstellt, und/oder
wobei M2M Services und M2M-servicespezifische Gruppen von M2M Knoten entweder auf einer physikalischen und mittleren Zugangsschicht, PHY/MAC-Schicht, oder auf höheren Schichten identifiziert werden können.

12. Ein Verfahren nach einem der Ansprüche 1 bis 11, wobei dieselbe SIM, Subscriber Identification Module, auf mehreren M2M Knoten installiert wird.

13. Ein Verfahren nach einem der Ansprüche 1 bis 12, wobei ein vordefinierter Kopplungsschlüssel oder vordefinierte Kopplungsschlüssel für die Zuordnung eines M2M Knoten oder von M2M Knoten zu einem Master-Terminal verwendet werden, das die Verwendung eines M2M Knotens oder von M2M Knoten ohne eine eigene SIM oder die Verwendung einer Master-Terminal-SIM ermöglicht.

14. Ein Verfahren nach einem der Ansprüche 1 bis 13, wobei zumindest eine RNTI, Radio Network Temporary Identifier, die einer IMSI, International Mobile Subscriber Identity, eines Master-Terminals zugeordnet ist, während einer anfänglichen Kopplungsprozedur erzeugt und einem M2M Knoten oder M2M Knoten zugeordnet wird.

15. Ein Netzwerk, vorzugsweise zur Ausführung des Verfahrens zum Betreiben eines Netzwerks nach einem der Ansprüche 1 bis 14, wobei zumindest ein M2M, Maschine-zu-Maschine, Knoten, der einen M2M Service bereitstellt und/oder nutzt, einem zellularen Netzwerk zugeordnet ist und zur Kommunikation mit dem zellularen Netzwerk zur Bereitstellung einer Maschinen-Typ Kommunikation, MTC, autorisiert wird, wobei das Netzwerk Mittel zum Zuordnen des zumindest einen M2M Knotens zu zumindest einem Master-Terminal, das eine spezifische Master-Terminal-ID, Kennung, besitzt, die das Master-Terminal innerhalb des zellularen Netzwerks eindeutig identifiziert, und Mittel zum Initialisieren eines Authentifizierungszustands des M2M Knotens oder der M2M Knoten aufweist, wobei das Initialisieren auf Authentifizierungsdaten des Master-Terminals basiert, so dass der M2M Knoten oder die M2M Knoten unter Verwendung der Master-Terminal-ID adressiert werden kann oder können und mit dem zellularen Netzwerk auf der Basis des initialisierten Authentifizierungszustands direkt kommunizieren kann oder können,
wobei zumindest ein M2M Service - der durch die M2M Knoten innerhalb deren M2M servicespezifischen Gruppe dargestellt wird - oder zumindest ein M2M Knoten oder die M2M Knoten innerhalb deren M2M-servicespezifischen Gruppe unter Verwendung einer Ortskennung einer Heimzelle zugeordnet ist oder sind.

## Revendications

1. Procédé d'exploitation d'un réseau, dans lequel au moins un noeud machine à machine, M2M, fournissant et/ou utilisant un service M2M est affecté à un réseau cellulaire et sera autorisé à communiquer avec le réseau cellulaire pour fournir une communication de type machine, MTC, dans lequel l'au moins un noeud M2M sera associé à au moins un terminal maître qui détient un identifiant, ID, de terminal maître, unique, qui identifie de manière unique ledit terminal maître au sein du réseau cellulaire, et un état d'authentification du noeud M2M ou des noeud M2M sera initialisé, sur la base de données d'authentification du terminal maître, pour que le noeud M2M ou les noeud M2M puisse(nt) être adressé(s) en utilisant l'ID de terminal maître et puisse(nt) communiquer directement avec le réseau cellulaire sur la base de l'état d'authentification initialisé,
dans lequel au moins un service M2M - représenté par les noeuds M2M au sein de leur groupe spécifique de service M2M - ou au moins un noeud M2M ou les noeuds M2M au sein de leur groupe spécifique de service M2M seront affectés à une cellule domestique en utilisant un identifiant d'emplacement.

2. Procédé selon la revendication 1, dans lequel de multiples noeuds M2M fournissant et/ou utilisant le même service M2M seront regroupés au sein d'un groupe spécifique de service M2M,
dans lequel le groupe spécifique de service M2M est affecté de préférence au terminal maître.

3. Procédé selon la revendication 2, dans lequel les noeuds M2M au sein du groupe spécifique de service M2M seront adressés simultanément.

4. Procédé selon l'une des revendications 1 à 3, dans lequel les noeuds M2M au sein du groupe spécifique de service M2M ou le groupe spécifique de service M2M ou un noeud M2M individuel seront adressés en utilisant un identifiant spécifique de service M2M en plus de l'ID de terminal maître.

5. Procédé selon l'une des revendications 1 à 4, dans lequel les noeuds M2M au sein du groupe spécifique de service M2M ou le groupe spécifique de service M2M ou un noeud M2M individuel seront adressés en utilisant une adresse de protocole Internet, IP, propre, en plus de l'ID de terminal maître.

6. Procédé selon l'une des revendications 1 à 5, dans lequel au moins un noeud M2M sera affecté à une cellule visiteuse qui est identique ou correspond à l'emplacement courant du terminal maître.

7. Procédé selon l'une des revendications 1 à 6, dans lequel le noeud M2M ou les noeuds M2M seront/sont appelé(s) dans une zone qui est définie par l'identifiant d'emplacement et/ou qui est dans la cellule visiteuse.

8. Procédé selon l'une des revendications 1 à 7, dans lequel le noeud M2M ou les noeuds M2M communique(nt) avec le réseau cellulaire via un point d'agrégation, qui agit comme un terminal mandataire entre le réseau cellulaire et le noeud M2M ou les noeuds M2M,
dans lequel le point d'agrégation collecte et réachemine de préférence des données de multiples noeuds M2M.

9. Procédé selon l'une des revendications 2 à 8, dans lequel au moins un groupe spécifique de service M2M sera géré en utilisant un accès planifié ou un accès aléatoire.

10. Procédé selon l'une des revendications 1 à 9, dans lequel une affectation de ressources sur une couche d'accès au support sera réalisée spécifiquement pour au moins un service M2M et/ou
dans lequel une affectation de ressources sera réalisée en utilisant une interface abstraite entre une fonction d'allocation de ressources et le service M2M.

11. Procédé selon l'une des revendications 1 à 10, dans lequel une interface sera fournie entre une couche L1 ou une couche L2 et une couche L3, qui fournit un accès logique abstrait aux ressources physiques et/ou
dans lequel des services M2M et des groupes spécifiques de service M2M de noeuds M2M peuvent être identifiés soit sur une couche physique et d'accès au milieu, couche PHY/MAC, soit sur des couches supérieures.

12. Procédé selon l'une des revendications 1 à 11, dans lequel le même module d'identification d'abonné, SIM, sera installé sur de multiples noeuds M2M.

13. Procédé selon l'une des revendications 1 à 12, dans lequel une clé d'appariement prédéfinie ou des clés d'appariement prédéfinies seront utilisées pour associer un noeud M2M ou des noeuds M2M avec un terminal maître, ce qui permet l'utilisation d'un noeud M2M ou de noeuds M2M sans SIM propre ou l'utilisation d'un SIM de terminal maître.

14. Procédé selon l'une des revendications 1 à 13, dans lequel au moins un identifiant temporaire de réseau radio, RNTI, associé à une identité internationale d'abonné mobile, IMSI, d'un terminal maître sera généré et alloué à un noeud M2M ou des noeuds M2M pendant une procédure de rattachement initiale.

15. Réseau, de préférence pour mettre en ouvre le procédé d'exploitation d'un réseau selon l'une quelconque des revendications 1 à 14, dans lequel au moins un noeud machine à machine, M2M, fournissant et/ou utilisant un service M2M est affecté à un réseau cellulaire et sera autorisé à communiquer avec le réseau cellulaire pour fournir une communication de type machine, MTC, le réseau comprenant des moyens pour associer l'au moins un noeud M2M à au moins un terminal maître qui détient un identifiant, ID, de terminal maître, unique, qui identifie de manière unique ledit terminal maître au sein du réseau cellulaire, et des moyens pour initialiser un état d'authentification du noeud M2M ou des noeuds M2M, l'initialisation étant basée sur des données d'authentification du terminal maître, pour que le noeud M2M ou les noeuds M2M puisse(nt) être adressé(s) en utilisant l'ID de terminal maître et puisse(nt) communiquer directement avec le réseau cellulaire sur la base de l'état d'authentification initialisé,
dans lequel au moins un service M2M - représenté par les noeuds M2M au sein de leur groupe spécifique de service M2M - ou au moins un noeud M2M ou les noeuds M2M au sein de leur groupe spécifique de service M2M sont affectés à une cellule domestique en utilisant un identifiant d'emplacement.
